# EUROPÄISCHE PATENTSCHRIFT

(11) **EP 3 642 506 B1**
(45) Veröffentlichungstag und Bekanntmachung des Hinweises auf die Patenterteilung: **05.05.2021**
(21) Anmeldenummer: 17733779.7
(22) Anmeldetag: 20.06.2017
(51) Int. Cl.: F16D 3/227, F16D 3/223

(54) **KUGELGLEICHLAUFVERSCHIEBEGELENK**
CONSTANT-VELOCITY SLIP BALL JOINT
JOINT COULISSANT HOMOCINÉTIQUE À BILLES

(43) Veröffentlichungstag der Anmeldung: 29.04.2020
(73) Patentinhaber: GKN Driveline Deutschland GmbH, 63073 Offenbach Am Main (DE)
(72) Erfinder: GÜNTHER, Johannes, 64750 Seckmauern (DE); KRANCIOCH, Norbert, 9220 Velden am Woerthersee (AT)
(74) Vertreter: karo IP
(86) Internationale Anmeldenummer: PCT/EP2017/065150
(87) Internationale Veröffentlichungsnummer: WO 2018/233817

(56) Entgegenhaltungen:
- DE-A1-102004 031 154
- DE-A1-102007 048 328
- DE-C1- 19 626 873
- DE-U1-202013 003 111

## Beschreibung

Die vorliegende Erfindung ist auf ein Kugelgleichlaufverschiebegelenk gerichtet. Das vorliegende Kugelgleichlaufverschiebegelenk (im Folgenden auch als Gelenk bezeichnet) wird insbesondere in einer Längswellenanordnung bei einem Kraftfahrzeug eingesetzt. Es ist darüber hinaus in sämtlichen weiteren Anwendungsfällen einsetzbar, in denen bisher Kugelgleichlaufverschiebegelenke zum Einsatz gekommen sind.

Kugelgleichlaufverschiebegelenke kommen insbesondere bei Kraftfahrzeugen im Bereich von Längswellenanordnungen aber auch in Seitenwellenanordnungen zum Einsatz. Die Längswellen dienen der Übertragung der Antriebskraft von einem Getriebe hin zu einer Achse. Insbesondere ist dabei das Getriebe im vorderen Bereich eines Kraftfahrzeugs angeordnet und die sich entlang der Längsachse des Kraftfahrzeuges erstreckende Längswellenanordnung dient der Übertragung der Antriebskräfte von diesem Getriebe hin zu einer Hinterachse. Bei Längswellenanordnungen sind regelmäßig kleinere Abbeugewinkel des Gelenks erforderlich, insbesondere von 0 bis 10 Winkelgrad. Die Seitenwellen dienen der Übertragung der Antriebskraft von einem Getriebe oder Differential hin zu einem Rad, also im Wesentlichen parallel zu einer Achse des Kraftfahrzeuges. Seitenwellen erstrecken sich quer zu der Längsachse des Kraftfahrzeuges. Bei Seitenwellen sind regelmäßig größere Abbeugewinkel des Gelenks erforderlich, insbesondere von 0 bis 22 Winkelgrad, bevorzugt von 3 bis 15 Winkelgrad, bei Verschiebegelenken in der Seitenwelle.

Kugelgleichlaufverschiebegelenke der hier betrachteten Art umfassen ein Gelenkaußenteil mit einer Drehachse und äußeren Kugelbahnen, ein Gelenkinnenteil mit inneren Kugelbahnen, eine Vielzahl von Drehmoment übertragenden Kugeln, die jeweils in einander zugeordneten äußeren und inneren Kugelbahnen geführt werden, und einen Käfig, der mit einer Vielzahl von Käfigfenstern versehen ist, die jeweils eine oder mehrere der Kugeln aufnehmen. Das Gelenkinnenteil ist gegenüber dem Gelenkaußenteil um einen Verschiebeweg entlang der Drehachse verschiebbar. Zumindest ein Teil der äußeren Kugelbahnen und zumindest ein Teil der inneren Kugelbahnen weisen einen Bahnschrägungswinkel gegenüber der Drehachse auf. Insbesondere weist ein Kugelbahngrund (also im Fall der äußeren Kugelbahnen jeweils die Bereiche der Kugelbahnen, die in einem größten Abstand von der Drehachse angeordnet sind; im Fall der inneren Kugelbahnen jeweils die Bereiche der Kugelbahnen, die in einem kleinsten Abstand zu einer Gelenkinnenteilmittelachse angeordnet sind) jeder Kugelbahn entlang des Verschiebewegs einen jeweils konstanten Abstand zur Drehachse entlang einer radialen Richtung auf.

Bei einer Abbeugung des Gelenkinnenteils wird das Gelenkinnenteil aus der gestreckten Lage (Drehachse des Gelenkaußenteils und Gelenkinnenteilmittelachse sind koaxial zueinander angeordnet) in eine (abweichende) abgebeugte Lage verschwenkt. Dann bilden die Drehachse des Gelenkaußenteils und die Gelenkinnenteilmittelachse einen (von "0" Grad abweichenden) Abbeugewinkel. Ein größter bzw. maximaler Abbeugewinkel des Gelenkinnenteils gegenüber dem Gelenkaußenteil ist durch eine Kontaktierung einer äußeren Kontaktfläche des Käfigs mit einer ersten Kontaktfläche des Gelenkaußenteils und/oder durch eine Kontaktierung einer inneren Kontaktfläche des Käfigs mit einer zweiten Kontaktfläche des Gelenkinnenteils vorgegeben. Bevorzugt wird ein Kugelgleichlaufverschiebegelenk so konstruiert, dass ein größter bzw. maximaler Abbeugewinkel des Gelenkinnenteils gegenüber dem Gelenkaußenteil durch eine Kontaktierung einer äußeren Kontaktfläche des Käfigs mit einer ersten Kontaktfläche des Gelenkaußenteils vorgegeben ist, wobei eine innere Kontaktfläche des Käfigs eine zweite Kontaktfläche des Gelenkinnenteils gerade (noch) nicht kontaktiert. Bei Kugelgleichlaufverschiebegelenken weist der Käfig bei einer Abbeugung des Gelenks den halben Abbeugewinkel auf wie das Gelenkinnenteil. Dabei weisen die Käfige außen eine im Längsschnitt konisch geformte äußere Kontaktfläche mit einem Konuswinkel gegenüber der Käfigmittelachse und innen eine zylindrisch geformte innere Kontaktfläche auf. Die Gelenkinnenteile weisen ebenfalls eine konisch geformte zweite Kontaktfläche mit einem Neigungswinkel gegenüber der Gelenkinnenteilmittelachse auf. Der Konuswinkel der äußeren Kontaktfläche des Käfigs und der Neigungswinkel der zweiten Kontaktfläche des Gelenkinnenteils sind jeweils ungefähr betragsgleich und gleich orientiert. Damit entspricht der erreichbare (größte) Abbeugewinkel des Gelenkinnenteils gegenüber dem Gelenkaußenteil der Summe von Konuswinkel und Neigungswinkel bzw. dem doppelten Betrag des Konuswinkels (da ja bevorzugt eine Kontaktierung von Gelenkinnenteil und Käfig vermieden werden soll).

Aus der DE 20 2013 003 111 U1 ist ein Kugelgleichlaufverschiebegelenkt bekannt.

Gerade im Bereich der Großserienfertigung von Kraftfahrzeugen sind die Anforderungen an alle Komponenten hinsichtlich zu erreichender Lebensdauer, Gewicht und/oder Kosten gestiegen. Es besteht daher ein beständiges Bedürfnis, auch Gelenke dieser Art im Hinblick auf die genannten Anforderungen weiterzuentwickeln.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Kugelgleichlaufverschiebegelenk bereitgestellt werden, das hinsichtlich der Dauerfestigkeit weiter verbessert ist.

Dies wird erreicht mit einem Kugelgleichlaufverschiebegelenk gemäß den Merkmalen des Patentanspruchs 1. Weitere vorteilhafte Ausgestaltungen der Erfindung sind in den abhängigen Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Hierzu trägt ein Kugelgleichlaufverschiebegelenk bei, das zumindest ein Gelenkaußenteil mit einer Drehachse und mit äußeren Kugelbahnen, ein Gelenkinnenteil mit inneren Kugelbahnen, eine Vielzahl von Drehmoment übertragenden Kugeln, die jeweils in einander zugeordneten äußeren und inneren Kugelbahnen geführt werden, und einen Käfig aufweist, wobei der Käfig mit einer Vielzahl von Käfigfenstern versehen ist, das jeweils eine oder mehrere der Kugeln aufnimmt. Das Gelenkinnenteil ist gegenüber dem Gelenkaußenteil um einen Verschiebeweg entlang der Drehachse verschiebbar. Zumindest ein Teil der äußeren Kugelbahnen und zumindest ein Teil der inneren Kugelbahnen weisen einen Bahnschrägungswinkel gegenüber der Drehachse (bei gestrecktem Gelenk) auf. Ein Kugelbahngrund jeder Kugelbahn weist entlang des Verschiebewegs einen jeweils konstanten Abstand zur Drehachse entlang einer radialen Richtung auf.

Ein größter (bzw. maximaler) Abbeugewinkel des Gelenkinnenteils gegenüber dem Gelenkaußenteil ist durch eine Kontaktierung einer äußeren Kontaktfläche des Käfigs mit einer ersten Kontaktfläche des Gelenkaußenteils und/oder durch eine (ggf. gleichzeitige) Kontaktierung einer inneren Kontaktfläche des Käfigs mit einer zweiten Kontaktfläche des Gelenkinnenteils vorgegeben. Bevorzugt ist das Kugelgleichlaufverschiebegelenk so konstruiert, dass ein größter (bzw. maximaler) Abbeugewinkel des Gelenkinnenteils gegenüber dem Gelenkaußenteil durch eine Kontaktierung einer äußeren Kontaktfläche des Käfigs mit einer ersten Kontaktfläche des Gelenkaußenteils vorgegeben ist, wobei eine innere Kontaktfläche des Käfigs eine zweite Kontaktfläche des Gelenkinnenteils gerade (noch) nicht kontaktiert. Der Käfig weist eine Käfigmittelachse auf und die innere Kontaktfläche des Käfigs ist konisch geformt, wobei die innere Kontaktfläche einen Öffnungswinkel von mehr als 0 Winkelgrad, insbesondere von mehr als 1 Winkelgrad, bevorzugt von mehr als 4 Winkelgrad gegenüber der Käfigmittelachse aufweist.

Auf die vorstehenden Ausführungen zu Kugelgleichlaufverschiebegelenken wird verwiesen. Das Kugelgleichverschiebegelenk weist mindestens 6 oder 6+n (n=1, 2, 3, ...) Kugeln auf.

Insbesondere verlaufen zumindest einzelne der äußeren und/oder inneren Kugelbahnen geneigt, oder unter einem Bahnschrägungswinkel, gegenüber der Drehachse. Das bedeutet, die Kugeln bewegen sich entlang der Kugelbahnen nicht nur in der axialen Richtung (parallel) entlang der Drehachse sondern auch (quer dazu) in der Umfangsrichtung.

Gemäß einer besonders vorteilhaften Ausgestaltung des Kugelgleichlaufverschiebegelenks weist zumindest ein Teil der äußeren Kugelbahnen und zumindest ein Teil der inneren Kugelbahnen einen Bahnschrägungswinkel gegenüber der Drehachse auf. Ein solcher Bahnschrägungswinkel unterstützt die Steuerungseigenschaften des Gelenks gegenüber den Kugeln, so dass deren Position in der axialen Richtung zu allen Zeitpunkten im Betrieb des Kugelgleichlaufverschiebegelenks festgelegt ist. Insbesondere ist mindestens ein Bahnpaar, umfassend eine äußere Kugelbahn und eine innere Kugelbahn, mit einer dazwischen angeordneten Kugel, mit unterschiedlich orientierten Bahnschrägungswinkeln ausgeführt, so dass die äußere Kugelbahn die innere Kugelbahn kreuzt.

Demnach ist die innere Kontaktfläche des Käfigs nun nicht zylindrisch (also parallel zur Käfigmittelachse verlaufend) ausgeführt sondern konisch geformt. Damit ist insbesondere eine Zurücknahme der Käfigkanten im Bereich der Stirnseiten des Käfigs gemeint, so dass eine stärkere Abbeugung des Käfigs gegenüber dem Gelenkinnenteil ermöglicht ist bzw. ein Neigungswinkel der zweiten Kontaktfläche des Gelenkinnenteils reduziert werden kann. Damit wird der vorher nur durch die konisch ausgeführte zweite Kontaktfläche des Gelenkinnenteils realisierte (ca. halbe) Abbeugewinkel nun sowohl durch die zweite Kontaktfläche als auch durch die konisch geformte innere Kontaktfläche gebildet. Der Öffnungswinkel und der Neigungswinkel bilden zusammen (insbesondere höchstens) den halben Abbeugewinkel bzw. sind kleiner als der (insbesondere durch den Konuswinkel vorgegebene) halbe Abbeugewinkel. Dabei bleibt die Kinematik des Kugelgleichlaufverschiebegelenks erhalten. Bei einer Abbeugung des Gelenkinnenteils gegenüber dem Gelenkaußenteil um einen Abbeugewinkel wird der Käfig mit der Käfigmittelachse weiter um den halben Abbeugewinkel gegenüber der Drehachse verschwenkt.

Dabei entspricht ein Konuswinkel der äußeren Kontaktfläche des Käfigs insbesondere dem halben Abbeugewinkel. Bevorzugt wird über den Konuswinkel der maximale Abbeugewinkel des Kugelgleichlaufverschiebegelenks bestimmt. Dafür ist der Konuswinkel größer als die Summe aus Öffnungswinkel und Neigungswinkel.

Insbesondere ist der Konuswinkel um höchstens 20 % größer oder kleiner, bevorzugt aber größer als die Summe aus Öffnungswinkel und Neigungswinkel.

Die so erreichte Reduzierung des Neigungswinkels der zweiten Kontaktfläche des Gelenkinnenteils ermöglicht, die Umschließung der Kugeln im Gelenkinnenteil zu erhöhen. Die Umschließung ist die, in Umfangsrichtung gesehen, seitliche Höhe (in radialer Richtung) der Kugelbahnen im Gelenkinnenteil, an der die Kugeln im Betrieb des Gelenks abgestützt werden. Die Erhöhung der Umschließung führt dazu, dass das Gelenkinnenteil mit höheren Drehmomenten belastet werden kann. Weiterhin wird die Dauerfestigkeit erhöht und damit die zu erwartende Lebensdauer des Kugelgleichlaufverschiebegelenks.

Zur Erhöhung der Dauerfestigkeit und der vorbestimmten Lebensdauer wurden bisher regelmäßig Gelenkinnenteile mit einem größeren Durchmesser verwendet, so dass eine höhere Umschließung der Kugeln dadurch erreicht werden konnte.

Bei einer Abbeugung des Gelenkinnenteils gegenüber dem Gelenkaußenteil um einen vorgegebenen Abbeugewinkel, ist die Käfigmittelachse insbesondere um den halben Abbeugewinkel gegenüber der Drehachse geneigt, wobei die zweite Kontaktfläche des Gelenkinnenteils gegenüber einer Gelenkinnenteilmittelachse zylindrisch oder konisch geformt ist und einen Neigungswinkel von mindestens 0 Winkelgrad gegenüber der Gelenkinnenteilmittelachse aufweist. Insbesondere ergibt eine Summe aus dem Betrag des Neigungswinkels und des Öffnungswinkels (höchstens) den halben größten Abbeugewinkel.

Die konisch geformte innere Kontaktfläche des Käfigs ermöglicht also insbesondere, dass die zweite Kontaktfläche des Gelenkinnenteils zylindrisch geformt ist, wobei dann der Neigungswinkel 0 Winkelgrad beträgt. Insbesondere entspricht dann der Öffnungswinkel (höchstens) dem halben größten Abbeugewinkel, im Fall einer Anordnung des Gelenks in einer Längswelle beträgt der Öffnungswinkel dann bis zu 5 Winkelgrad, im Fall einer Anordnung in einer Seitenwelle bis zu 10 Winkelgrad.

Insbesondere sind die Öffnungswinkel und Neigungswinkel (mit Neigungswinkel größer 0 Winkelgrad), z. B. bei gestrecktem Gelenk, gegenüber der Drehachse unterschiedlich bzw. entgegengesetzt orientiert.

Der Öffnungswinkel und der Neigungswinkel können betragsgleich ausgeführt sein.

Der Öffnungswinkel und der Neigungswinkel können betragsunterschiedlich ausgeführt sein. Insbesondere ist bevorzugt, dass der Öffnungswinkel vom Betrag her größer ist als der Neigungswinkel.

Es ist vorteilhaft, wenn der Öffnungswinkel der inneren Kontaktfläche des Käfigs möglichst groß und der Neigungswinkel der zweiten Kontaktfläche des Gelenkinnenteils möglichst klein gewählt wird, so dass die Umschließung der Kugeln in den inneren Kugelbahnen des Gelenkinnenteils maximiert werden kann. Insbesondere wird ein Verhältnis von Öffnungswinkel zu Neigungswinkel von mindestens 2:1 oder sogar mindestens 4:1 vorgeschlagen, bevorzugt von ca. 5:1.

Es wird insbesondere vorgeschlagen, dass der Öffnungswinkel mindestens 4 Winkelgrad beträgt; bevorzugt mindestens 8 Winkelgrad und besonders bevorzugt mindestens 12 Winkelgrad.

Insbesondere ist der Käfig derart gestaltet, dass die innere Kontaktfläche in einer Umfangsrichtung umlaufend ausgeführt ist.

Die innere Kontaktfläche ist an einer inneren Umfangsfläche und die äußere Kontaktfläche an einer äußeren Umfangsfläche des Käfigs angeordnet, wobei die Kontaktflächen jeweils (unmittelbar) benachbart zu den beiden, in Richtung entlang der Käfigmittelachse weisenden Stirnseiten des Käfigs angeordnet sind, wobei zwischen den Stirnseiten und den Kontaktflächen die Käfigfenster, in der Umfangsrichtung benachbart zueinander, angeordnet sind. Insbesondere sind zwischen den Stirnseiten und den Kontaktflächen Fasen (also gebrochene oder verrundete Kanten) angeordnet, die aber für die Funktion des Kugelgleichlaufverschiebegelenks keine Wirkung aufweisen.

Insbesondere beträgt bei dem Kugelgleichlaufverschiebegelenk der Verschiebeweg mindestens 5 Millimeter und höchstens 100 Millimeter, bevorzugt mindestens 10 Millimeter und höchstens 80 Millimeter, besonders bevorzugt mindestens 30 Millimeter, besonders bevorzugt höchstens 60 Millimeter.

Der Verschiebeweg bezeichnet insbesondere den Teil der Kugelbahnen, in denen die Kugeln während des vorgesehenen Betriebs des Kugelgleichlaufverschiebegelenk angeordnet sein können/sollen. Der Verschiebeweg umfasst dabei insbesondere nicht die sogenannten Endbereiche der Kugelbahnen, bei denen, wenn Kugeln dort angeordnet sind, bereits eine Funktionseinschränkung des Kugelgleichlaufverschiebegelenks vorliegt. Die erreichbaren Verschiebewege sind dabei von den Bahnschrägungswinkeln und den Durchmessern der Kugeln abhängig.

Insbesondere weist das Gelenkaußenteil in einer Umfangsrichtung zwischen benachbart angeordneten Kugelbahnen jeweils einen äußeren Steg auf. Die erste Kontaktfläche ist an dem äußeren Steg angeordnet.

Insbesondere weist das Gelenkinnenteil in einer Umfangsrichtung zwischen benachbart angeordneten Kugelbahnen jeweils einen inneren Steg auf. Die zweite Kontaktfläche ist an dem inneren Steg angeordnet.

Die (inneren/äußeren) Stege erstrecken sich in der radialen Richtung jeweils über den Kugelbahngrund hinaus und bilden so die seitliche Begrenzung der Kugelbahn und die Umschließung der Kugeln.

Es wird weiterhin ein Kraftfahrzeug vorgeschlagen, das zumindest ein hier vorgeschlagenes Kugelgleichlaufverschiebegelenk aufweist. Insbesondere wird das Kugelgleichlaufverschiebegelenk zur Verwendung bei einem PKW vorgeschlagen.

Vorsorglich sei angemerkt, dass die hier verwendeten Zahlwörter ("erste", "zweite", "dritte",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein bekanntes Kugelgleichlaufverschiebegelenk im gestreckten Zustand im Längsschnitt;
- Fig. 2:: ein Kugelgleichlaufverschiebegelenk im gestreckten Zustand im Längsschnitt;
- Fig. 3:: das bekannte Kugelgleichlaufverschiebegelenk nach Fig. 1 im abgebeugten Zustand im Längsschnitt;
- Fig. 4:: das Kugelgleichlaufverschiebegelenk nach Fig. 2 im abgebeugten Zustand im Längsschnitt;
- Fig. 5:: den Käfig des bekannten Kugelgleichlaufverschiebegelenks nach Fig. 1 und Fig. 3 im Längsschnitt;
- Fig. 6:: den Käfig des Kugelgleichlaufverschiebegelenks nach Fig. 2 und Fig. 4 im Längsschnitt;
- Fig. 7:: das Gelenkinnenteil des bekannten Kugelgleichlaufverschiebegelenks nach Fig. 1 und Fig. 3 im Längsschnitt;
- Fig. 8:: das Gelenkinnenteil des Kugelgleichlaufverschiebegelenks nach Fig. 2 und Fig. 4 im Längsschnitt;
- Fig. 9:: das Gelenkinnenteil nach Fig. 8 in einer Seitenansicht;
- Fig. 10:: das Gelenkinnenteil nach Fig. 9 in einer Ansicht entlang der Gelenkinnenteilmittelachse im Querschnitt;
- Fig. 11:: ein weiteres Kugelgleichlaufverschiebegelenk im gestreckten Zustand im Längsschnitt;
- Fig. 12:: eine Darstellung des Verschiebewegs anhand von Kugelgleichlaufverschiebegelenken, dargestellt im Schnitt.

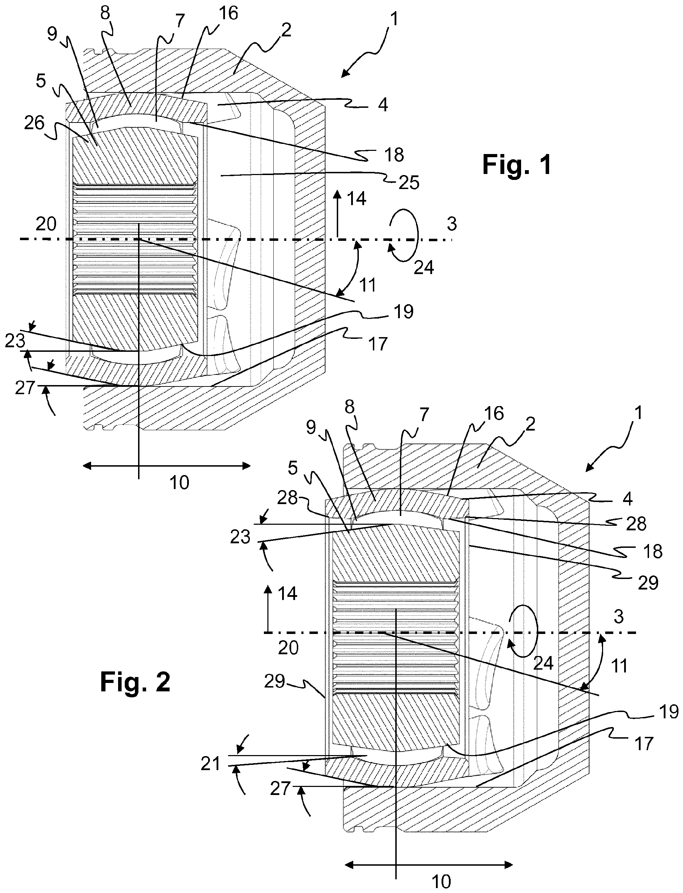

Fig. 1 zeigt ein bekanntes Kugelgleichlaufverschiebegelenk 1 im gestreckten Zustand im Längsschnitt. Das Kugelgleichlaufverschiebegelenk 1 umfasst ein Gelenkaußenteil 2 mit einer Drehachse 3 und äußeren Kugelbahnen 4, ein Gelenkinnenteil 5 mit inneren Kugelbahnen 6, eine Vielzahl von Drehmoment übertragenden Kugeln 7, die jeweils in einander zugeordneten äußeren und inneren Kugelbahnen 4, 6 geführt werden, und einen Käfig 8, der mit einer Vielzahl von Käfigfenstern 9 versehen ist, die jeweils eine oder mehrere der Kugeln 7 aufnehmen. Die äußeren Kugelbahnen 4 sind durch äußere Stege 25 voneinander beabstandet angeordnet. Die inneren Kugelbahnen 6 sind durch innere Stege 26 voneinander beabstandet angeordnet.

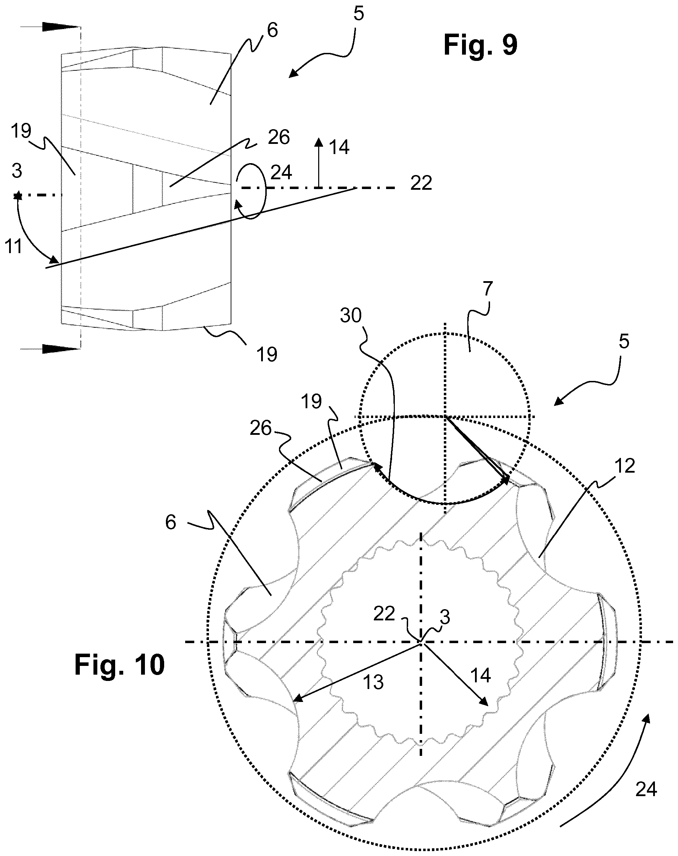

Zumindest ein Teil der äußeren Kugelbahnen 4 und zumindest ein Teil der inneren Kugelbahnen 6 weisen einen Bahnschrägungswinkel 11 gegenüber der Drehachse 3 auf Ein Kugelbahngrund 12 jeder Kugelbahn 4, 6 entlang des Verschiebewegs 10 weist einen jeweils konstanten Abstand 13 zur Drehachse 3 entlang einer radialen Richtung 14 auf (siehe auch Fig. 10).

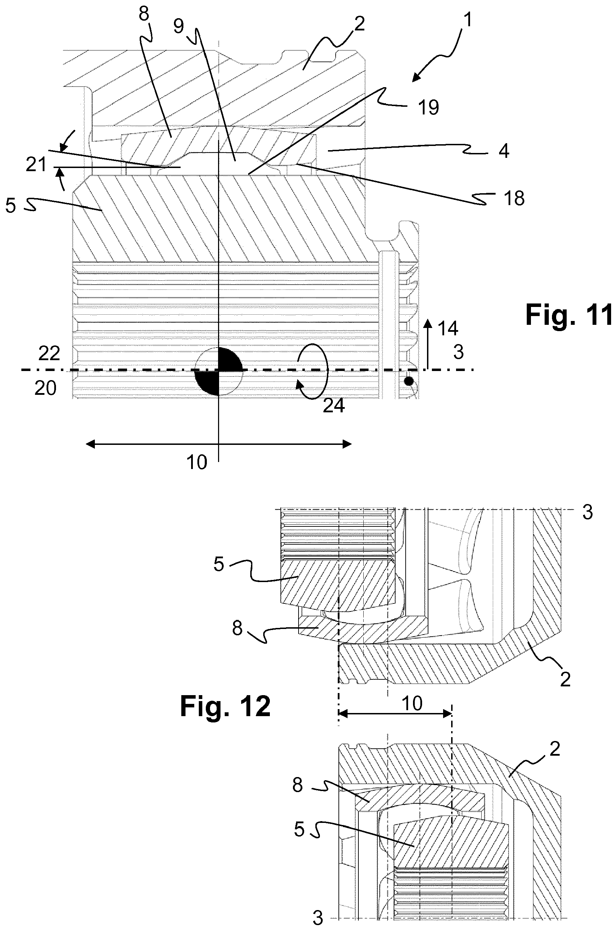

Das Gelenkinnenteil 5 ist gegenüber dem Gelenkaußenteil 2 um einen Verschiebeweg 10 entlang der Drehachse 3 verschiebbar. Die erreichbaren Verschiebewege 10 sind von den Bahnschrägungswinkeln 11 und den Durchmessern der Kugeln abhängig und können in Fig. 1 und auch den weiteren Figuren nur schematisch angegeben werden (siehe auch Fig. 12).

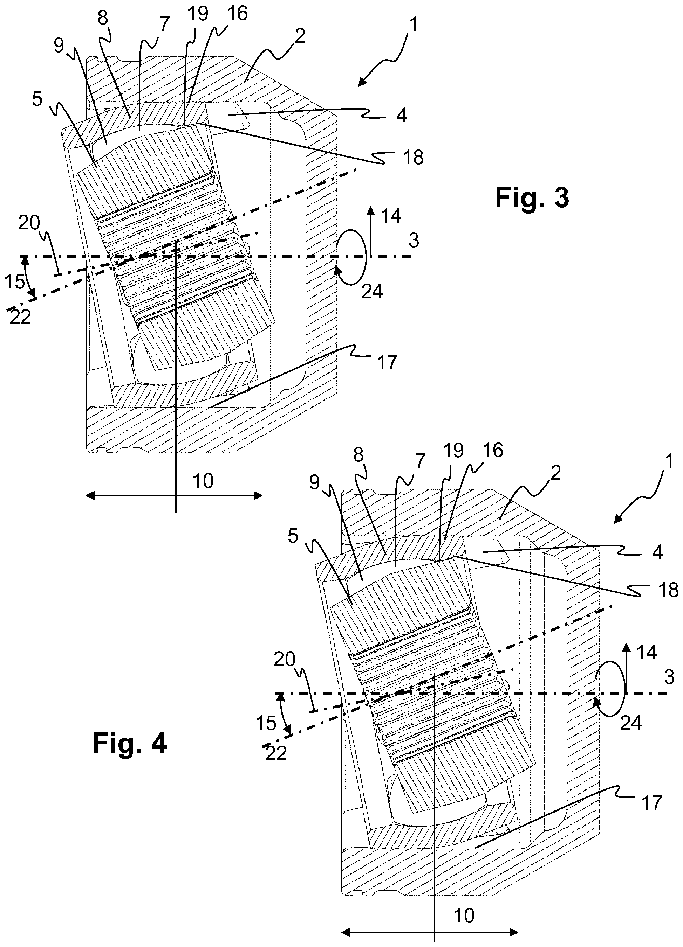

Bei einer Abbeugung des Gelenkinnenteils 5 wird das Gelenkinnenteil 5 aus der gestreckten Lage (Drehachse 3 des Gelenkaußenteils 2 und Gelenkinnenteilmittelachse 22 sind koaxial zueinander angeordnet) in eine abgebeugte Lage verschwenkt (siehe Fig. 3). In Fig. 3 sind die Drehachse 3 des Gelenkaußenteils 2 und die Gelenkinnenteilmittelachse 22 unter einem größten Abbeugewinkel 15 zueinander angeordnet. Ein größter Abbeugewinkel 15 des Gelenkinnenteils 5 gegenüber dem Gelenkaußenteil 2 ist durch eine Kontaktierung einer äußeren Kontaktfläche 16 des Käfigs 8 mit einer ersten Kontaktfläche 17 des Gelenkaußenteils 2 vorgegeben. Dabei sind eine innere Kontaktfläche 18 des Käfigs 8 und eine zweite Kontaktfläche 19 des Gelenkinnenteils 5 (gerade noch) voneinander beabstandet angeordnet. Bei Kugelgleichlaufverschiebegelenken 1 weist der Käfig 8 bei einer Abbeugung des Gelenks den halben Abbeugewinkel 15 auf wie das Gelenkinnenteil 5.

Der Käfig 8 des Kugelgleichlaufverschiebegelenks 1 nach Fig. 1 weist außen eine im Längsschnitt konisch geformte äußere Kontaktfläche 16 mit einem Konuswinkel 27 gegenüber der Käfigmittelachse 20 und innen eine zylindrisch geformte innere Kontaktfläche 18 auf. Das Gelenkinnenteil 5 weist ebenfalls eine konisch geformte zweite Kontaktfläche 19 mit einem Neigungswinkel 23 gegenüber der Gelenkinnenteilmittelachse 22 auf. Der Konuswinkel 27 der äußeren Kontaktfläche 16 des Käfigs 8 und der Neigungswinkel 23 der zweiten Kontaktfläche 19 des Gelenkinnenteils 5 sind hier nahezu jeweils betragsgleich und gleich orientiert. Der erreichbare (größte) Abbeugewinkel 15 des Gelenkinnenteils 5 gegenüber dem Gelenkaußenteil 2 entspricht dem doppelten Betrag des Konuswinkels 27.

Fig. 2 zeigt ein Kugelgleichlaufverschiebegelenk 1 im gestreckten Zustand im Längsschnitt. Auf die Ausführungen zu Fig. 1 wird verwiesen. Im Unterschied zum bekannten Kugelgleichlaufverschiebegelenk 1 nach Fig. 1 weist der Käfig 8 des Kugelgleichlaufverschiebegelenks 1 eine Käfigmittelachse 20 auf und die innere Kontaktfläche 18 des Käfigs 8 ist konisch geformt, wobei die innere Kontaktfläche 18 einen Öffnungswinkel 21 von mehr als Null Winkelgrad, hier ungefähr 4 Winkelgrad gegenüber der Käfigmittelachse 20 aufweist.

Bei diesem Kugelgleichlaufverschiebegelenk 1 ist die innere Kontaktfläche 18 des Käfigs 8 nun also gerade nicht mehr zylindrisch ausgeführt (also parallel zur Käfigmittelachse 20 verlaufend, siehe Fig. 1) sondern konisch geformt. Damit ist eine Zurücknahme der Käfigkanten 28 im Bereich der Stirnseiten 29 des Käfigs 8 gemeint. Die so erreichte Reduzierung des Neigungswinkels 23 der zweiten Kontaktfläche 19 des Gelenkinnenteils 5 ermöglicht, die Umschließung der Kugeln 7 im Gelenkinnenteil 5 zu erhöhen. Dabei bleibt die Kinematik des Kugelgleichlaufverschiebegelenks 1 jedoch erhalten, d. h., bei einer Abbeugung des Gelenkinnenteils 5 gegenüber dem Gelenkaußenteil 2 um einen Abbeugewinkel 15 wird der Käfig 8 mit der Käfigmittelachse 20 weiter um den halben Abbeugewinkel 15 gegenüber der Drehachse 3 verschwenkt.

Dabei entspricht ein Konuswinkel 27 der äußeren Kontaktfläche 16 des Käfigs 8 weiterhin (wie in Fig. 1) dem halben Abbeugewinkel 15.

In Fig. 2 sind betragsgleiche Öffnungswinkel 21 und Neigungswinkel 23 gezeigt. Erkennbar sind Öffnungswinkel 21 und Neigungswinkel 23 gegenüber der Drehachse 3 einander entgegengesetzt orientiert.

Fig. 3 zeigt das bekannte Kugelgleichlaufverschiebegelenk 1 nach Fig. 1 im abgebeugten Zustand im Längsschnitt. Auf die Ausführungen zu Fig. 1 wird verwiesen. Hier ist das Gelenkinnenteil 5 gegenüber dem Gelenkaußenteil 2 um den größten Abbeugewinkel 15 abgebeugt angeordnet. Ein größter Abbeugewinkel 15 des Gelenkinnenteils 5 gegenüber dem Gelenkaußenteil 2 ist hier durch eine Kontaktierung einer äußeren Kontaktfläche 16 des Käfigs 8 mit einer ersten Kontaktfläche 17 des Gelenkaußenteils 2 vorgegeben. Dabei kontaktieren eine innere Kontaktfläche 18 des Käfigs 8 und eine zweite Kontaktfläche 19 des Gelenkinnenteils 5 nicht einander. Bei Kugelgleichlaufverschiebegelenken 1 weist der Käfig 8 bei einer Abbeugung des Gelenks den halben Abbeugewinkel 15 auf wie das Gelenkinnenteil 5.

Fig. 4 zeigt das Kugelgleichlaufverschiebegelenk 1 nach Fig. 2 im abgebeugten Zustand im Längsschnitt. Auf die Ausführungen zu Fig. 2 und 3 wird verwiesen.

Im Unterschied zu Fig. 3 wird durch die so erreichte Reduzierung des Neigungswinkels 23 der zweiten Kontaktfläche 19 des Gelenkinnenteils 5 ermöglicht, die Umschließung der Kugeln 7 im Gelenkinnenteil 5 zu erhöhen. Dabei bleibt die Kinematik des Kugelgleichlaufverschiebegelenks 1 jedoch erhalten, d. h., bei einer Abbeugung des Gelenkinnenteils 5 gegenüber dem Gelenkaußenteil 2 um einen Abbeugewinkel 15 wird der Käfig 8 mit der Käfigmittelachse 20 weiter um den halben Abbeugewinkel 15 gegenüber der Drehachse 3 verschwenkt.

Dabei entspricht ein Konuswinkel 27 der äußeren Kontaktfläche 16 des Käfigs 8 weiterhin (wie in Fig. 1 und 3) dem halben Abbeugewinkel 15.

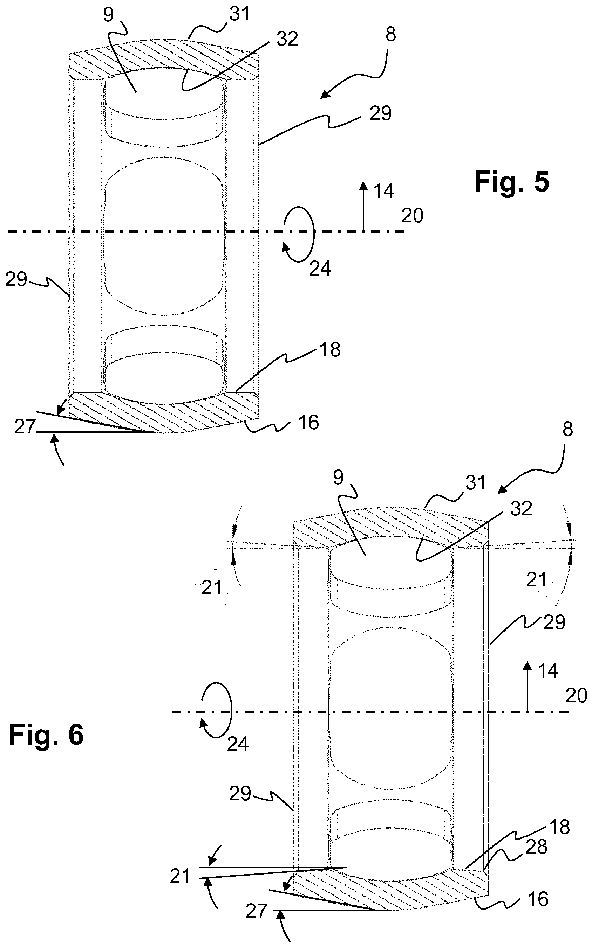

Fig. 5 zeigt den Käfig 8 des bekannten Kugelgleichlaufverschiebegelenks 1 nach Fig. 1 und 3 im Längsschnitt. Fig. 6 zeigt den Käfig 8 des Kugelgleichlaufverschiebegelenks 1 nach Fig. 2 und 4 im Längsschnitt. Die Figuren werden im Folgenden zumindest teilweise gemeinsam beschrieben. Der Käfig 8 ist derart gestaltet, dass die innere Kontaktfläche 18 in einer Umfangsrichtung 24 umlaufend ausgeführt ist. Die innere Kontaktfläche 18 ist an einer inneren Umfangsfläche 32 und die äußere Kontaktfläche 16 an einer äußeren Umfangsfläche 31 des Käfigs 8 angeordnet, wobei die Kontaktflächen 16, 18 jeweils (unmittelbar) benachbart zu den beiden, in Richtung entlang der Käfigmittelachse 20 weisenden Stirnseiten 29 des Käfigs 8 angeordnet sind, wobei zwischen den Stirnseiten 29 und den Kontaktflächen 16, 18 die Käfigfenster 9 in der Umfangsrichtung 24 benachbart zueinander angeordnet sind.

Im Unterschied zum bekannten Kugelgleichlaufverschiebegelenk 1 mit dem Käfig nach Fig. 5, mit zylindrisch geformter innerer Kontaktfläche 18, ist bei dem Käfig 8 des Kugelgleichlaufverschiebegelenks 1 nach Fig. 6 die innere Kontaktfläche 18 des Käfigs 8 konisch geformt, wobei die innere Kontaktfläche 18 einen Öffnungswinkel 21 von mehr als 0 Winkelgrad, hier ungefähr 4 Winkelgrad gegenüber der Käfigmittelachse 20 aufweist.

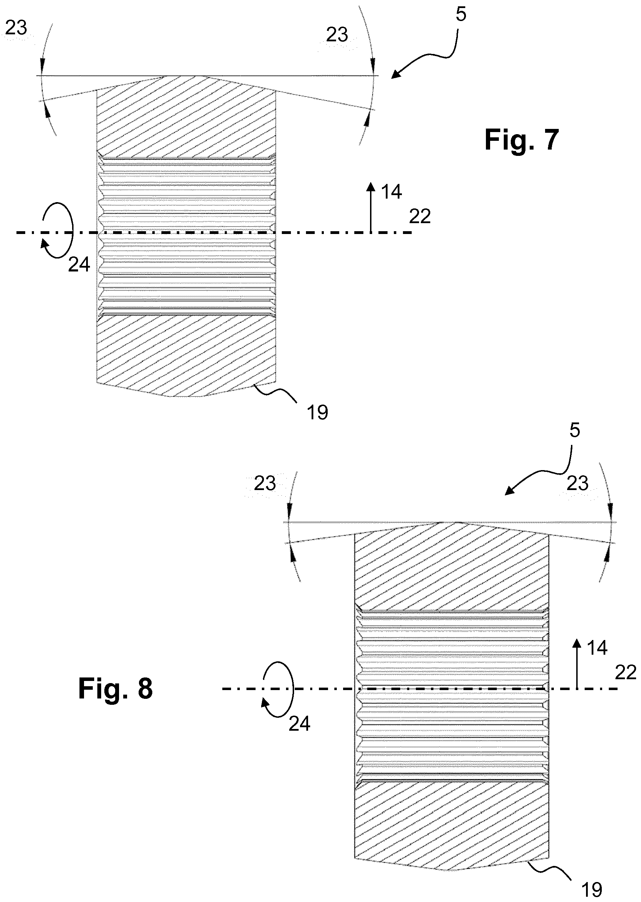

Fig. 7 zeigt das Gelenkinnenteil 5 des bekannten Kugelgleichlaufverschiebegelenks 1 nach Fig. 1 und 3 im Längsschnitt. Fig. 8 zeigt das Gelenkinnenteil 5 des Kugelgleichlaufverschiebegelenk 1 nach Fig. 2 und 4 im Längsschnitt. Die Fig. 7 und 8 werden im Folgenden gemeinsam beschrieben.

Die Gelenkinnenteile 5 weisen jeweils eine konisch geformte zweite Kontaktfläche 19 mit einem Neigungswinkel 23 gegenüber der Gelenkinnenteilmittelachse 22 auf. Erkennbar ist der Neigungswinkel 23 des Gelenkinnenteils 5 nach Fig. 7 deutlich größer als der Neigungswinkel 23 des Gelenkinnenteils 5 nach Fig. 8.

Fig. 9 zeigt das Gelenkinnenteil 5 nach Fig. 8 in einer Seitenansicht. Das Gelenkinnenteil 5 weist innere Kugelbahnen 6 auf, in denen jeweils eine Drehmoment übertragende Kugel 7 anordenbar ist. Zumindest ein Teil der inneren Kugelbahnen 6 weisen einen Bahnschrägungswinkel 11 gegenüber der Drehachse 3 auf. Ein Kugelbahngrund 12 jeder Kugelbahn 6 entlang des Verschiebewegs 10 weist einen jeweils konstanten Abstand 13 zur Drehachse 3 entlang einer radialen Richtung 14 auf (siehe auch Fig. 10). Das Gelenkinnenteil 5 weist in einer Umfangsrichtung 24 zwischen benachbart angeordneten inneren Kugelbahnen 6 jeweils einen inneren Steg 26 auf. Die zweite Kontaktfläche 19 ist an dem inneren Steg 26 angeordnet.

Die inneren Stege 26 erstrecken sich in der radialen Richtung 14 jeweils über den Kugelbahngrund 12 hinaus und bilden so die seitliche Begrenzung der Kugelbahn 6 und die Umschließung 30 der Kugeln.

In Fig. 9 ist die Schnittebene der Darstellung nach Fig. 10 dargestellt.

Fig. 10 zeigt das Gelenkinnenteil 5 nach Fig. 9 im Querschnitt (wie in Fig. 9 dargestellt) in einer Ansicht entlang der Gelenkinnenteilmittelachse 22. Dabei ist eine Kugel 7 in einer inneren Kugelbahn 6 gestrichelt dargestellt.

Die durch die konische Ausführung der inneren Kontaktfläche 18 des Käfigs 8 erreichte Reduzierung des Neigungswinkels 23 der zweiten Kontaktfläche 19 des Gelenkinnenteils 5 ermöglicht nun, die Umschließung 30 der Kugeln 7 im Gelenkinnenteil 5 zu erhöhen (siehe angedeutete größere Umschließung 30). Die Umschließung 30 ist die, in Umfangsrichtung 24 gesehen, seitliche Höhe (in radialer Richtung 14) der Kugelbahnen 6 im Gelenkinnenteil 5, an der die Kugeln 7 im Betrieb des Gelenks noch abgestützt werden. Die Erhöhung der Umschließung 30 führt dazu, dass das Gelenkinnenteil 5 mit höheren Drehmomenten belastet werden kann. Weiterhin wird die Dauerfestigkeit erhöht und damit die zu erwartende Lebensdauer des Kugelgleichlaufverschiebegelenks 1.

Fig. 11 zeigt ein weiteres Kugelgleichlaufverschiebegelenk 1 im gestreckten Zustand im Längsschnitt. Auf die Ausführungen zu Fig. 2 wird verwiesen. Auch hier ist die innere Kontaktfläche 18 des Käfigs 8 wie in Fig. 2 konisch geformt, wobei die innere Kontaktfläche 18 einen Öffnungswinkel 21 von mehr als Null Winkelgrad, hier ungefähr 4 Winkelgrad gegenüber der Käfigmittelachse 20 aufweist.

Hier ist im Unterschied zu dem Kugelgleichlaufverschiebegelenk 1 nach Fig. 2 die zweite Kontaktfläche 19 des Gelenkinnenteils 5 gegenüber einer Gelenkinnenteilmittelachse 22 zylindrisch geformt und weist daher einen Neigungswinkel 23 von Null Winkelgrad gegenüber der Gelenkinnenteilmittelachse 22 auf. Auch hier gilt, dass eine Summe aus dem Betrag des Neigungswinkels 23 und des Öffnungswinkels 21 kleiner ist als der halbe größte Abbeugewinkel 15 und kleiner ist als der Konuswinkel 27.

Die konisch geformte innere Kontaktfläche 18 des Käfigs 8 ermöglicht also insbesondere, dass die zweite Kontaktfläche 19 des Gelenkinnenteils 5 zylindrisch geformt ist, wobei dann der Neigungswinkel 23 Null Winkelgrad beträgt.

Fig. 12 zeigt eine Darstellung des Verschiebewegs 10 anhand von Kugelgleichlaufverschiebegelenken, dargestellt im Schnitt. Das Gelenkinnenteil 5 ist gegenüber dem Gelenkaußenteil 2 um einen Verschiebeweg 10 entlang der Drehachse 3 verschiebbar. Die erreichbaren Verschiebewege 10 sind von den Bahnschrägungswinkeln 11 und den Durchmessern der Kugeln 7 abhängig. Das Gelenkinnenteil 5 in der oberen Teildarstellung der Fig. 12 ist maximal aus dem Gelenkaußenteil 2 entlang der Drehachse 3 verschoben angeordnet. Das Gelenkinnenteil 5 in der unteren Teildarstellung der Fig. 12 ist maximal in das Gelenkaußenteil 2 entlang der Drehachse 3 hinein verschoben angeordnet.

### Bezugszeichenliste

- 1: Kugelgleichlaufverschiebegelenk
- 2: Gelenkaußenteil
- 3: Drehachse
- 4: äußere Kugelbahn
- 5: Gelenkinnenteil
- 6: innere Kugelbahn
- 7: Kugel
- 8: Käfig
- 9: Käfigfenster
- 10: Verschiebeweg
- 11: Bahnschrägungswinkel
- 12: Kugelbahngrund
- 13: Abstand
- 14: radiale Richtung
- 15: Abbeugewinkel
- 16: äußere Kontaktfläche
- 17: erste Kontaktfläche
- 18: innere Kontaktfläche
- 19: zweite Kontaktfläche
- 20: Käfigmittelachse
- 21: Öffnungswinkel
- 22: Gelenkinnenteilmittelachse
- 23: Neigungswinkel
- 24: Umfangsrichtung
- 25: äußerer Steg
- 26: innerer Steg
- 27: Konuswinkel
- 28: Käfigkante
- 29: Stirnseite
- 30: Umschließung
- 31: äußere Umfangsfläche
- 32: innere Umfangsfläche

## Patentansprüche

1. Kugelgleichlaufverschiebegelenk (1), zumindest aufweisend ein Gelenkaußenteil (2) mit einer Drehachse (3) und mit äußeren Kugelbahnen (4), ein Gelenkinnenteil (5) mit inneren Kugelbahnen (6), einer Vielzahl von Drehmoment übertragenden Kugeln (7), die jeweils in einander zugeordneten äußeren Kugelbahnen (4) und inneren Kugelbahnen (6) geführt werden, und einen Käfig (8), der mit einer Vielzahl von Käfigfenstern (9) versehen ist, die jeweils eine oder mehrere der Kugeln (7) aufnehmen; wobei das Gelenkinnenteil (5) gegenüber dem Gelenkaußenteil (2) um einen Verschiebeweg (10) entlang der Drehachse (3) verschiebbar ist; wobei zumindest ein Teil der äußeren Kugelbahnen (4) und zumindest ein Teil der inneren Kugelbahnen (6) einen Bahnschrägungswinkel (11) gegenüber der Drehachse (3) aufweisen; wobei ein Kugelbahngrund (12) jeder Kugelbahn (4, 6) entlang des Verschiebewegs (10) einen jeweils konstanten Abstand (13) zur Drehachse (3) entlang einer radialen Richtung (14) aufweist; wobei ein größter Abbeugewinkel (15) des Gelenkinnenteils (5) gegenüber dem Gelenkaußenteil (2) durch eine Kontaktierung einer äußeren Kontaktfläche (16) des Käfigs (8) mit einer ersten Kontaktfläche (17) des Gelenkaußenteils (2) und/oder durch eine Kontaktierung einer inneren Kontaktfläche (18) des Käfigs (10) mit einer zweiten Kontaktfläche (19) des Gelenkinnenteils (5) vorgegeben ist; **dadurch gekennzeichnet, dass** der Käfig (8) eine Käfigmittelachse (20) aufweist und die innere Kontaktfläche (18) konisch geformt ist; wobei die innere Kontaktfläche (18) einen Öffnungswinkel (21) von mehr als 0 Winkelgrad gegenüber der Käfigmittelachse (20) aufweist.

2. Kugelgleichlaufverschiebegelenk (1) nach Patentanspruch 1, wobei bei einer Abbeugung des Gelenkinnenteils (5) gegenüber dem Gelenkaußenteil (2) um einen Abbeugewinkel (15) die Käfigmittelachse (20) um den halben Abbeugewinkel (15) gegenüber der Drehachse (3) geneigt ist, wobei die zweite Kontaktfläche (19) des Gelenkinnenteils (5) gegenüber einer Gelenkinnenteilmittelachse (22) zylindrisch oder konisch geformt ist und einen Neigungswinkel (23) von mindestens 0 Winkelgrad gegenüber der Gelenkinnenteilmittelachse (22) aufweist, wobei eine Summe aus dem Betrag des Neigungswinkels (23) und des Öffnungswinkels (21) höchstens den halben größten Abbeugewinkel (15) ergibt.

3. Kugelgleichlaufverschiebegelenk (1) nach Patentanspruch 2, wobei der Öffnungswinkel (21) und der Neigungswinkel (23) betragsgleich ausgeführt sind.

4. Kugelgleichlaufverschiebegelenk (1) nach Patentanspruch 2, wobei der Öffnungswinkel (21) und der Neigungswinkel (23) betragsunterschiedlich ausgeführt sind.

5. Kugelgleichlaufverschiebegelenk (1) nach Patentanspruch 4, wobei der Öffnungswinkel (21) vom Betrag her größer ist als der Neigungswinkel (23).

6. Kugelgleichlaufverschiebegelenk (1) nach einem der vorhergehenden Patentansprüche, wobei der Öffnungswinkel (21) mindestens 4 Winkelgrad beträgt.

7. Kugelgleichlaufverschiebegelenk (1) nach einem der vorhergehenden Patentansprüche, wobei die innere Kontaktfläche (18) in einer Umfangsrichtung (24) umlaufend ausgeführt ist.

8. Kugelgleichlaufverschiebegelenk (1) nach einem der vorhergehenden Patentansprüche, wobei der Verschiebeweg (10) mindestens 10 Millimeter beträgt.

9. Kugelgleichlaufverschiebegelenk (1) nach einem der vorhergehenden Patentansprüche, wobei das Gelenkaußenteil (2) in einer Umfangsrichtung (24) zwischen benachbart angeordneten Kugelbahnen (4) jeweils einen äußeren Steg (25) aufweist; wobei die erste Kontaktfläche (17) an dem äußeren Steg (25) angeordnet ist.

10. Kugelgleichlaufverschiebegelenk (1) nach einem der vorhergehenden Patentansprüche, wobei das Gelenkinnenteil (5) in einer Umfangsrichtung (24) zwischen benachbart angeordneten Kugelbahnen (6) jeweils einen inneren Steg (26) aufweist; wobei die zweite Kontaktfläche (19) an dem inneren Steg (26) angeordnet ist.

## Claims

1. Constant-velocity slip ball joint (1) at least having an outer joint part (2) with an axis of rotation (3) and with outer ball tracks (4), having an inner joint part (5) with inner ball tracks (6), having a multiplicity of torque-transmitting balls (7), each guided in associated outer ball tracks (4) and inner ball tracks (6), and having a cage (8), which is provided with a multiplicity of cage windows (9), which accommodate in each case one or more of the balls (7); wherein the inner joint part (5) can be displaced in relation to the outer joint part (2) by a displacement distance (10) along the axis of rotation (3); wherein at least a part of the outer ball tracks (4) and at least a part of the inner ball tracks (6) are at a track-helix angle (11) in relation to the axis of rotation (3); wherein a floor (12) of each ball track (4, 6), along the displacement path (10), is spaced apart from the axis of rotation (3) by a respectively constant spacing (13) along a radial direction (14); wherein a maximum angle of deflection (15) of the inner joint part (5) in relation to the outer joint part (2) is predetermined by an outer contact surface (16) of the cage (8) establishing contact with a first contact surface (17) of the outer joint part (2) and/or by an inner contact surface (18) of the cage (8) establishing contact with a second contact surface (19) of the inner joint part (5); **characterized in that** the cage (8) has a centre axis (20) and the inner contact surface (18) is conical; wherein the inner contact surface (18) is at an opening angle (21) of more than 0 degrees in relation to the centre axis (20) of the cage.

2. Constant-velocity slip ball joint (1) according to claim 1, wherein, in the case of the inner joint part (5) being deflected in relation to the outer joint part (2) by an angle of deflection (15), the centre axis (20) of the cage is inclined in relation to the axis of rotation (3) by half the angle of deflection (15), wherein the second contact surface (19) of the inner joint part (5) is cylindrical or conical in relation to a centre axis (22) of the inner joint part and is at an angle of inclination (23) of at least 0 degrees in relation to the centre axis (22) of the inner joint part, wherein the sum of the angle of inclination (23) and of the opening angle (21) is at most half the maximum angle of deflection (15).

3. Constant-velocity slip ball joint (1) according to claim 2, wherein the opening angle (21) and the angle of inclination (23) have the same value.

4. Constant-velocity slip ball joint (1) according to claim 2, wherein the opening angle (21) and the angle of inclination (23) have different values.

5. Constant-velocity slip ball joint (1) according to claim 4, wherein the value of the opening angle (21) is larger than that of the angle of inclination (23).

6. Constant-velocity slip ball joint (1) according to one of the preceding claims, wherein the opening angle (21) is at least 4 degrees.

7. Constant-velocity slip ball joint (1) according to one of the preceding claims, wherein the inner contact surface (18) is designed to run all the way around in a circumferential direction (24).

8. Constant-velocity slip ball joint (1) according to one of the preceding claims, wherein the displacement distance (10) is at least 10 millimetres.

9. Constant-velocity slip ball joint (1) according to one of the preceding claims, wherein the outer joint part (2) has in each case one outer crosspiece (25) between adjacent ball tracks (4), as seen in a circumferential direction (24); wherein the first contact surface (17) is arranged on the outer crosspiece (25).

10. Constant-velocity slip ball joint (1) according to one of the preceding claims, wherein the inner joint part (5) has in each case one inner crosspiece (26) between adjacent ball tracks (6), as seen in a circumferential direction (24); wherein the second contact surface (19) is arranged on the inner crosspiece (26).

## Revendications

1. Joint coulissant homocinétique à billes (1), présentant au moins une partie de joint extérieure (2) pourvu d'un axe de rotation (3) et de couronnes d'orientation à billes extérieures (4), une partie de joint intérieure (5) pourvue de couronnes d'orientation à billes intérieures (6), d'une pluralité de billes (7) de transmission de couple qui sont chacune guidées dans des couronnes d'orientation à billes extérieures (4) et des couronnes d'orientation à billes intérieures (6) associées les unes aux autres, et une cage (8) qui est munie d'une pluralité de fenêtres de cage (9) qui reçoivent chacune une ou plusieurs des billes (7) ; la partie de joint intérieure (5) pouvant coulisser par rapport à la partie de joint extérieure (2) le long de l'axe de rotation (3) sur un trajet de coulissement (10) ; au moins une partie des couronnes d'orientation à billes extérieures (4) et au moins une partie des couronnes d'orientation à billes intérieures (6) présentant un angle d'hélice (11) par rapport à l'axe de rotation (3) ; un fond de couronne d'orientation à billes (12) de chaque couronne d'orientation à billes (4, 6) présentant le long du trajet de coulissement (10) une distance (13) respectivement constante par rapport à l'axe de rotation (3) le long d'une direction radiale (14) ; un angle de coude (15) le plus grand de la partie de joint intérieure (5) étant spécifiée par rapport à la partie de joint extérieure (2) par une mise en contact d'une surface de contact extérieure (16) de la cage (8) avec une première surface de contact (17) de la partie de joint extérieure (2) et/ou par une mise en contact d'une surface de contact intérieure (18) de la cage (10) avec une deuxième surface de contact (19) de la partie de joint intérieure (5) ; **caractérisé en ce que** la cage (8) présente un axe médian de cage (20) et la surface de contact intérieure (18) est de forme conique ; la surface de contact intérieure (18) présentant un angle d'ouverture (21) de plus de 0 degré d'angle par rapport à l'axe médian de cage (20).

2. Joint coulissant homocinétique à billes (1) selon la revendication 1, dans lequel lors d'une déviation de la partie de joint intérieure (5) par rapport à la partie de joint extérieure (2) selon un angle de déviation (15), l'axe médian de cage (20) est incliné selon la moitié de l'angle de déviation (15) par rapport à l'axe de rotation (3), dans lequel la deuxième surface de contact (19) de la partie de joint intérieure (5) est formée de manière cylindrique ou conique par rapport à un axe médian de partie de joint intérieure (22), et présente un angle d'inclinaison (23) d'au moins 0 degré d'angle par rapport à l'axe médian de partie de joint intérieure (22), une somme de la valeur de l'angle d'inclinaison (23) et de l'angle d'ouverture (21) résultant au plus à la moitié du plus grand angle de déviation (15).

3. Joint coulissant homocinétique à billes (1) selon la revendication 2, dans lequel l'angle d'ouverture (21) et l'angle d'inclinaison (23) sont réalisés avec les mêmes valeurs.

4. Joint coulissant homocinétique à billes (1) selon la revendication 2, dans lequel l'angle d'ouverture (21) et l'angle d'inclinaison (23) sont réalisés avec des valeurs différentes.

5. Joint coulissant homocinétique à billes (1) selon la revendication 4, dans lequel l'angle d'ouverture (21) présente une valeur supérieure à celle de l'angle d'inclinaison (23).

6. Joint coulissant homocinétique à billes (1) selon l'une quelconque des revendications précédentes, dans lequel l'angle d'ouverture (21) mesure au moins 4 degrés d'angle.

7. Joint coulissant homocinétique à billes (1) selon l'une quelconque des revendications précédentes, dans lequel la surface de contact intérieure (18) est réalisée de manière périphérique dans une direction circonférentielle (24).

8. Joint coulissant homocinétique à billes (1) selon l'une quelconque des revendications précédentes, dans lequel le trajet de coulissement (10) mesure au moins 10 millimètres.

9. Joint coulissant homocinétique à billes (1) selon l'une quelconque des revendications précédentes, dans lequel la partie de joint extérieure (2) présente dans une direction circonférentielle (24) entre des couronnes d'orientation à billes (4) disposées de manière adjacente respectivement une nervure extérieure (25) ; la première surface de contact (17) étant disposée au niveau de la nervure extérieure (25).

10. Joint coulissant homocinétique à billes (1) selon l'une quelconque des revendications précédentes, dans lequel la partie de joint intérieure (5) présente dans une direction circonférentielle (24) entre des couronnes d'orientation à billes (6) disposées de manière adjacente respectivement une nervure intérieure (26) ; la deuxième surface de contact (19) étant disposée au niveau de la nervure intérieure (26).
